Europäisches Patentamt

European Patent Office

Office européen des brevets

(19)

(11) Publication number: **0 048 272**
**B1**

## EUROPEAN PATENT SPECIFICATION

(12)

(45) Date of publication of patent specification: **12.09.84**

(51) Int. Cl.³: **B 01 D 35/06**

(21) Application number: **81901068.7**

(22) Date of filing: **23.03.81**

(86) International application number:
**PCT/US81/00383**

(87) International publication number:
**WO 81/02685 01.10.81 Gazette 81/23**

(54) **REMOVABLE COIL ELECTROMAGNETIC FILTER.**

(30) Priority: **27.03.80 US 134372**

(43) Date of publication of application:
**31.03.82 Bulletin 82/13**

(45) Publication of the grant of the patent:
**12.09.84 Bulletin 84/37**

(84) Designated Contracting States:
**CH DE FR GB LI**

(56) References cited:
**EP-A-0 015 808**
**DE-C- 478 770**
**GB-A-1 204 324**
**US-A-3 539 509**
**US-A-3 979 288**
**US-A-4 054 513**

**THE FRENCH PROGRAM ON**
**ELECTROMAGNETIC FILTRATION 19**
**SEPTEMBER 1979, DARRAS ET AL.**

(73) Proprietor: **THE BABCOCK & WILCOX COMPANY**
**1010 Common Street P.O. Box 60035**
**New Orleans Louisiana 70160 (US)**

(72) Inventor: **MARKERT, Wallace, Jr.**
**959 Glenwood Drive**
**Alliance, OH 44601 (US)**
Inventor: **CAMPBELL, Thomas M., Jr.**
**2102 Noble Forest Drive**
**Norcross, GA 30092 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to electromagnetic filters that can be used for removing magnetisable material from fluids.

Iron oxides and other substances that are attracted to magnets can be removed from fluid by electromagnetic techniques. One illustrative method that relies on this phenomenon is described in more detail in US Patent No. 3 979 288 (H. G. Heitmann et al.) entitled "Double Flow Magnetic Filter, Apparatus and Method". This patent discloses a generally cylindrical vessel that contains a charge of magnetisable pellets or balls in a central portion of the vessel and has a circumscribing electromagnetic coil. Fluid that is to be filtered is admitted to the vessel through tubes that discharge into the central plane of the charge of balls by way of an array of open passages. Upon energising the electromagnetic coil, a magnetic field is produced that magnetises the balls. Magnetic impurities are attracted to the balls, thereby enabling purified water to flow from the vessel.

There are a number of disadvantages that characterise this technique. Frequently, and particularly in connection with large commercial nuclear power plants, it is desirable to remove the electromagnetic coil for serving or replacement. In order to remove the coil of the Heitmann apparatus it is necessary to dismantle piping to and from the filter. This is a disadvantage particularly in nuclear power plant applications where a certain amount of radioactivity is present in the filter and associated piping. Furthermore, high purity water, sometimes $D_2O$, also known as heavy water, is contained within the piping and filter, and would be expensive to replace.

US Patent No. 4 954 513 (Windle) discloses an electromagnetic filter comprising a vessel, a magnetisable filter assembly disposed within the vessel, fluid circulation conduit means penetrating the vessel at an inlet for admitting fluid to the vessel to be passed through the magnetisable filter assembly and penetrating the vessel at an outlet for discharging fluid from the vessel after the fluid has passed through the magnetisable filter assembly, and magnetising means for magnetising the magnetisable filter assembly, the magnetising means comprising an electromagnetic coil that circumscribes the outer surface of the vessel in the vicinity of the magnetisable filter assembly. More specifically, the filter disclosed in US 3 954 513 comprises a pair of filter assemblies each disposed in a respective part of the vessel and the vessel and coil are relatively movable such that the coil can be aligned with either filter assembly. Each end of the vessel is provided with an inlet and outlet. The coil cannot be removed from and replace on the vessel except by breaking pipework leading to the inlset and outlets or separating the two sections of the vessel.

According to the present invention there is provided an electromagnetic filter comprising:

a vessel,

At least one magnetisable filter assembly disposed within the vessel,

fluid circulation conduit means penetrating the vessel at an inlet for admitting fluid to the vessel to be passed through the at least one magnetisable filter assembly and penetrating the vessel at an outlet for discharging fluid from the vessel after the fluid has passed through the at least one magnetisable filter assembly, and

magnetising means for magnetising the at least one magnetisable filter assembly, the magnetising means comprising an electromagnetic coil that circumscribes the outer surface of the vessel in the vicinity of the at least one magnetisable filter assembly.

the magnetic filter being characterised in that the magnetising means is removable and replaceable while maintaining the circulation of fluid to, through, and from the vessel, the magnetising means including at least one electromagnetic coil which circumscribes the outer surface of the vessel in the vicinity of the at least one magnetisable filter assembly and which does not circumscribe a portion of the outer surface of the vessel between the inlet and the outlet whereby the electromagnetic coil may be removed from the vessel in one piece without disrupting the fluid circulation means, and in that the at least one magnetisable filter assembly includes a fluidisable bed of magnetisable pellets, a support screen extending across the interior of the vessel below the bed to support the bed, the support screen being apertured to preclude the passage of the pellets therethrough and to allow the passage of fluid therethrough, and a restraining screen positioned above the bed and apertured to preclude the passage of the pellets therethrough and to allow the passage to fluid therethrough.

Embodiments of the present invention described hereinbelow overcome or at least alleviate the disadvantages of the prior art by enabling removal of the electromagnetic coil without necessitating removal of flanges or cutting of pipe. In one embodiment disclosed below, this is assisted by locating the inlet and outlet to the vessel on the same end of the vessel. Where a plurality of electromagnetic coils is used, such as when dual flow filters are employed, both inlet and outlet could be alternatively located between the coils, thereby allowing removal of each of the coils at a respective end of the vessel.

Other known magnetic filters devices, such as those disclosed in US Patents Nos. 1 673 837 (Lotz), 1 996 106 (Hall), and 2 508 666 (Bower) show fluid inlet and outlets on the same end of the vessel, similarly to an embodiment of the present invention described hereinbelow. However, these devices differ in structure, function and results from the embodiments of the present invention described hereinbelow where a removable and replaceable structure is provided to magnetise the filter assembly, whereby the magnetising means may be repaired without disturbing the filtrate circulation circuit, thus yielding the resulting advantage of containment of hazardous or expensive filtrate within the piping and vessel and simplified removal of the magnetising means.

In an embodiment of the invention described hereinbelow a non-magnetisable core is provided for the filter bed by a central filtrate outlet piping. This non-magnetisable core is at the centre of the bed where the magnetic field is the weakest and enables lower energy usage while sustaining sufficient magnetic field strength to all portions of the bed to hold the pellets down in the fluid flow steam.

Advantages of the above-mentioned preferred feature that both the inlet and the outlet are at the same end of the vessel or on approximately the same horizontal plane are that less piping is required and support structure can be located close to the piping connection, resulting in less severe loads on the support structure under seismic and burst pipe events.

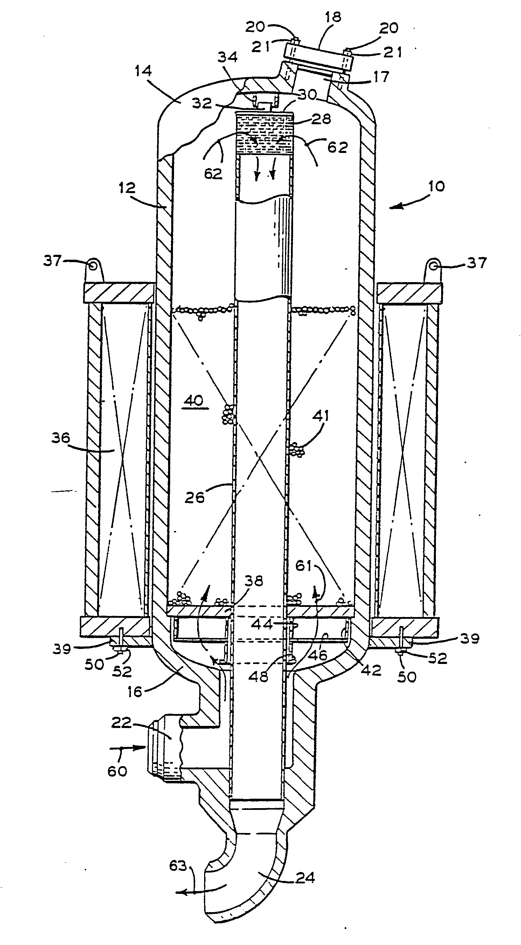

The invention will now be further described, by way of illustrative and non-limiting example, with reference to the accompanying drawing, the sole figure of which shows an electromagnetic filter embodying the invention in full section.

The drawing shows an electromagnetic filter 10 that has a vertically mounted longitudinal extending cylindrical vessel 12 with an upper end 14 and a lower end 16. An access hatch 17 penetrates the upper end 14 and is sealed by a cover 18 held in place by studs 20 and nuts 21. The lower end 16 is penetrated by an inlet 22 and an outlet 24. A central pipe 26 extends longitudinally from the outlet 24 through the vessel 12. A cylindrical restraining screen 28 forms an extension of the central pipe 26. A disc or lid 30 is fixed to the screen 28 thereby directing all flow through the vessel 12 to the central pipe 26 through the screen 28. A knob 32 extends upwardly from the disc 30 and is engaged by a receiver 34 fixed to the upper end 14. The knob 32 however does not extend to the surface of the end 14, thereby providing allowance for a discrepancy in thermal expansion of the vessel 12 and the central pipe 26.

An electromagnetic coil assembly 36 circumscribes the vessel 12 and rests on and is removably affixed to a support plate 39 by studs 50 and nuts 52. The plate 39 is affixed to the end 16 of the vessel 12. A structure supports the electromagnetic filter 10 at the support plate 39. This structure is readily supplied by one skilled in the art of industrial support structure and, for clarity, is not shown in the drawing. The coil assembly 36 is provided with lifting lugs 37 for lifting the assembly 36 off of the support plate 39 for servicing of the assembly 36. It is apparent that this may be accomplished without disturbing connections to the inlet 22 or outlet 24.

A magnetisable filter bed 40 is disposed within the vessel 12. The bed 40 includes a plurality of magnetisable pellets 41. In the preferred embodiments, the pellets 41 are steel balls having a diameter of 3.18 mm (0.125 in).

The bed 40 is supported within the vessel 12 by a support plate 38 which is an annular ring apertured to preclude the passage of pellets 41 therethrough while allowing the passage of fluid therethrough. Perforated annular ring flow diffusers 46 and 48 are mounted to cylindrical mounting sleeves 42 and 44 which are in turn affixed to the support plate 38. The diffusers 46 and 48 serve evently to distribute inlet fluid flow through the bed 40.

In operation of the filter 10, the coil assembly 36 is energised thereby magnetising the bed 40. Fluid containing magnetisable impurities enters the inlet 22 in the direction of an arrow 60, flows around the central pipe 26 through the diffusers 48 and 46, and flows through the support plate 38 in the direction of the arrows 61. Fluid impurities are attracted to the magnetised pellets 41 and the filtered fluid (filtrate) emerges from the top of the bed 40 and flows through the screen 28 and down the central pipe 26 in the direction of arrows 62. The filtrate then flows through the central pipe 26 and exits via the outlet 24 in the direction of an arrow 63.

The coil assembly 36 is removable from the filter 10 while maintaining the circulation of fluid to, through and from the vessel 12. To remove the coil assembly 36 from the filter 10, the nuts 52 are removed and the assembly 36 is simply lifted therefrom without disturbing the fluid flow.

The area within the vessel 12 above the bed 40 is provided to enable cleaning of the bed by flushing of the filter 10. When flushing the filter 10, flushing fluid flows in a vertically upward direction within the vessel 12, generally following the direction of the arrows 61. The force of the upwardly flowing stream of flushing fluid is applied to the pellets or balls 41 in the bed 40 in a direction that is opposite to the gravitational force direction. The oppositely directed forces tend to "fluidise" and agitate the filter bed by increasing its volume and causing the individual pellet or balls 41 to separate and bounce against one another. The screen 28, however, prevents the pellets 41 from entering the central pipe 26.

This increase in the volume of the filter bed 40 exposed more of the surfaces of the pellets 41 to the cleansing action of the flushing fluid. The mutual agitation of the pellets or balls 41 also tends to break or scour contaminants from the surface of the pellets or balls, thereby enhancing the cleansing action of the flushing fluid.

The above description and drawing illustrate an embodiment utilising a central pipe and an inlet and an outlet at the lower end. However, the invention is not limited thereto. Alternative embodiments could include an internal vertical flat baffle dividing the vessel into two sections providing inlet to one section and outlet from the other section at the same end of the vessel with an internal flowpath between sections at the opposite end of the vessel from the inlet thereto. In this embodiment, either one or both sections can house magnetisable balls.

Another embodiment would employ a second vessel disposed within the first. The second vessel would hold the bed of pellets. Liquid would enter the second vessel, flows up therethrough, pass through the bed of pellets and then down the annulus formed between the two vessels to the outlet.

Another embodiment could employ two coil assemblies with the inlet and outlet positioned therebetween. This embodiment would enable dual flow capability.

The above description and drawing is thus only illustrative of one embodiment of the present invention be limited thereto. Any modification of the present invention which comes cation of the present invention which comes within the scope of the clains is considered part of the present invention.

## Claims

1. An electromagnetic filter comprising:
a vessel (12),
at least one magnetisable filter assembly (40) disposed within the vessel (12),
fluid circulation conduit means penetrating the vessel (12) at an inlet (22) for admitting fluid to the vessel to be passed through the at least one magnetisable filter assembly (40) and penetrating the vessel at an outlet (24) for discharging fluid from the vessel after the fluid has passed through the at least one magnetisable filter assembly, and
magnetising means for magnetising the at least one magnetisable filter assembly (40), the magnetising means comprising an electromagnetic coil (36) that circumscribes the outer surface of the vessel (12) in the vicinity of the at least one magnetisable filter assembly (40),
the magnetic filter (10) being characterised in that the magnetising means is removable and replaceable while maintaining the circulation of fluid to, through, and from the vessel, the magnetising means including at least one electromagnetic coil (36) which circumscribes the outer surface of the vessel (12) in the vicinity of the at least one magnetisable filter assembly (40) and which does not circumscribe a portion of the outer surface of the vessel between the inlet and the outlet whereby the electromagnetic coil may be removed from the vessel at one piece without disrupting the fluid circulation means, and in that the at least one magnetisable filter assembly (40) includes a fluidisable bed of magnetisable pellets (41), a support screen (38) extending across the interior of the vessel (12) below the bed to support the bed, the support screen being apertured to preclude the passage of the pellets (41) therethrough and to allow the passage of fluid therethrough, and a restraining screen (28) positioned above the bed and apertured to preclude the passage of the pellets (41) therethrough and to allow the passage of fluid therethrough.

2. A filter according to claim 1, comprising flow diffusing means (46, 48) positioned within the vessel (12) for enhancing a uniform fluid flow rate profile through the at least one magnetisable filter bed (40).

3. A filter according to claim 1 or claim 2, wherein the magnetisable filter assembly (40) includes a non-magnetisable core extending through the filter assembly.

4. A filter according to claim 3, wherein the fluid circulation conduit means includes a central pipe (26) disposed within the vessel (12) and extending from the outlet (24) through the magnetisable filter assembly (40) along the core thereof and thereafter opening to the vessel (12), the arrangement being such that the inlet (22) admits fluid to the vessel (12) to flow through an annulus formed between the central pipe (16) and the vessel (12), through the magnetisable filter assembly (40), and through the central pipe (26) to the outlet (26).

5. A filter according to claim 4, comprising a sealable hatch (17) penetrating the vessel (12) to provide access to the interior thereof.

6. A filter according to claim 4 or claim 5, wherein the restraining screen (28) forms a porous extension of the central pipe (26), a lid (30) is positioned to preclude fluid communication between the vessel (12) and the central pipe (26) except through the restraining screen (28), a knob (32) protrudes through the lid (30), and a receiver (34) is positioned on the interior surface of the vessel (12) to accept the knob (32).

7. A filter according to any one of claims 1 to 6, wherein there is a single electromagnetic coil (36) and the inlet (22) and outlet (24) are both disposed at one end (16) of the vessel.

8. A filter according to any one of claims 1 to 6, wherein there are a plurality of electromagnetic coils (36) and the inlet (22) and outlet (24) are disposed between the coils.

## Revendications

1. Filtre électromagnétique comprenant:
un récipient (12),
au moins un ensemble de filtre magnétisable (40) disposé à l'intérieur de récipient (12),
des conduits de circulation de fluide pénétrant dans le récipient (12) par une entrée (22) pour laisser arriver du fluide au récipient afin qu'il passe à travers le ou les ensembles de filtre magnétisable (40) et pénétrant dans le récipient par une sortie (24) pour évacuer du fluide du récipient après que le fluide ait passé à travers le ou les ensembles de filtre magnétisable, et

des moyens de magnétisation servant à magnétiser le ou les ensembles de filtre magnétisable (40), les moyens de magnétisation comprenant une bobine électromagnétique (36) qui entoure la surface extérieure du récipient (12) au voisinage du ou des ensembles de filtre magnétisable (40).

le filtre magnétique (10) étant caractérisé par le fait que les moyens de magnétisation sont amovibles et remplaçables tout en maintenant la circulation du fluide qui arrive au récipient, le traverse et la quitte, les moyens de magnétisation comprenant au moins une bobine électromagnétique (36) qui entoure la surface extérieure du récipient (12) au voisinage du ou des ensembles de filtre magnétisable (40) et qui n'entoure pas une partie de la surface extérieure du récipient située entre l'entrée et la sortie, de sorte que l'on peut retirer la bobine électromagnétique du récipient, d'une seule pièce, sans rompre les moyens de circulation de fluide, et par le fait que le ou les ensembles de filtre magnétisable (40) comprennent une couche fluidisable de grains magnétisables (41), un tamis support (38) s'étendant en travers de l'intérieur du récipient (12) en dessous de la couche pour supporter la couche, le tamis support étant muni d'ouvertures de manière à empêcher le passage des grains (41) au travers et à permettre le passage de fluide au travers, et un tamis de retenue (28) placé au dessus de la couche et muni d'ouvertures de manière à empêcher le passage des grains (41) au travers et à permettre le passage de fluide au travers.

2. Filtre selon la revendication 1, comprenant des moyens de diffusion d'écoulement (46, 48) placés à l'intérieur du récipient (12) de manière à favoriser un profil uniforme de débit de fluide à travers la ou les couches filtrantes magnétisables (40).

3. Filtre selon la revendication 1 ou la revendication 2, dans lequel l'ensemble de filtre magnétisable (40) comprend un noyau non magnétisable passant à travers l'ensemble de filtre.

4. Filtre selon la revendication 3, dans lequel les conduits de circulation de fluide comprennent un tuyau central (26) disposé à l'intérieur du récipient (12) partant de la sortie (24), traversant l'ensemble de filtre magnétisable (40), longeant le noyau de celui-ci et s'ouvrant ensuite vers le récipient (12), la disposition étant telle que l'entrée (22) laisse arriver du fluide au récipient (12) de façon qu'il s'écoule à travers un anneau formé entre le tuyau central (26) et le récipient (12), à travers l'ensemble de filtre magnétisable (40) et à travers le tuyau central (26), jusqu'à la sortie (24).

5. Filtre selon la revendication 4, comprenant une trappe (17) pouvant être bouchée, qui pénètre dans le récipient (12) pour assurer l'accès à l'intérieur de celui-ci.

6. Filtre selon la revendication 4 ou la revendication 5, dans lequel le tamis de retenue (28) forme un prolongement poreux du tuyau central (26), un couvercle (30) est placé de manière à empêcher la communication pour le fluide entre le récipient (12) et le tuyau central (26) excepté à travers le tamis de retenue (28), une protubérance (32) se dresse à travers le couvercle (30) et un logement (34) est placé sur la surface intérieure du récipient (12) de manière à recevoir la protubérance (32).

7. Filtre selon une quelconque des revendications 1 à 6, dans lequel il y a une seule bobine électromagnétique (36) et l'entrée (22) et la sortie (24) sont toutes deux disposées à une extrémité (16) du récipient.

8. Filtre selon une quelconque des revendications 1 à 6; dans lequel il y a plusieurs bobines électromagnétiques (36) et l'entrée (22) et la sortie (24) sont disposées entre les bobines.

**Patentansprüche**

1. Elektromagnetisches Filer mit einem Behälter (12), mindestens einer magnetisierbaren Filteranordnung (40), die in dem Behälter (12) angeordnet ist, mit einer Fließmittel-Umwälzleitungseinrichtung, welche durch den Behälter (12) an einem Einlaß (22) hindurchtritt, zum Zuführen von Fließmittel zu dem Behälter, damit es durch die mindestens eine magnetisierbare Filteranordnung (40) hindurchgeführt wird, und die durch die Behälter an einem Auslaß (24) hindurchtritt zum Entleeren des Fließmittels aus dem Behälter, nachdem das Fließmittel durch die mindestens eine magnetisierbare Filteranordnung hindurchgegangen ist, und mit Magnetisiermitteln zum Magnetisieren der mindestens einen magnetisierbaren Filteranordnung (40), wobei die Magnetisiermittel eine elektromagnetische Spule (36) aufweisen, welche die äußere Oberfläche des Behälter (12) in der Nachbarschaft der mindestens einen magnetisierbaren Filteranordnung (40) umschreibt, wobei das magnetische Filter (10) dadurch gekennzeichnet ist, daß das Magnetisiermittel entfernbar und ersetzbar ist, während die Zirkulation des Fließmittels zu dem Behälter durch diesen und aus diesem heraus aufrechterhalten wird, das Magnetisiermittel mindestens eine elektromagnetische Spule (36) aufweist, welche die äußere Oberfläche des Behälters (12) in der Nachbarschaft der mindestens eine magnetisierbaren Filteranordnung (40) umschreibt und die nicht eine Teil der äußeren Oberfläche des Behälters zwischen dem Einlaß und dem Auslaß umschreibt, wodurch die elektromagnetische Spule aus dem Behälter in einem Stück entfernt werden kann, ohne daß die Fließmittelumwälzeinrichtung zerbrochen wird und daß die mindestens eine magnetisierbare Filteranordnung (40) ein fluidisierbares Bett magnetisierbarer Pellets (41), ein Trägerschild (38) aufweist, welches sich quer im Inneren des Behälters (12) unter dem Bett zur Stützung desselben erstreckt, wobei das Trägerschild mit Öffnungen versehen ist, um den Durchgang der Pellets (41) durch die Öffnungen hindurch zu unterbinden und den Durchgang des Fließmittels zu ermöglichen, und ein Rückhaltesieb (28) aufweist, welches über dem Bett angeordnet und mit Öffnungen versehen ist, um den Durchgang der Pellets (41) zu unterbinden und den Durchgang des Fließmittels durch das Sieb hindurch zu ermöglichen.

2. Filter nach Anspruch 1, mit Strömungsverteilmitteln (46, 48), die in dem Behälter (12) für die Begünstigung eines gleichmäßigen Fließmittelströmungsgeschwindigkeitsprofiles durch das mindestens eine magnetisierbare Filterbett (40) angeordnet sind.

3. Filter nach Anspruch 1 oder 2, wobei die magnetisierbare Filteranordnung (40) einennichtmagnetisierbaren Kern aufweist, welcher sich durch die Filteranordnung hindurch erstreckt.

4. Filter nach Anspruch 3, wobei die Fließmittelumwälzleitungseinrichtung ein mittiges Rohr (26) aufweist, welches innerhalb des Behälters (12) angeordnet ist und sich vom Auslaß (24) durch die magnetisierbare Filteranordnung (40) längs deren Kern erstreckt und sich danach zum Behälter (12) öffnet, wobei die Anordnung derart ist, daß der Einlaß (22) Fließmittel zum Behälter (12) zuläßt, um durch einen Ringraum zu strömen, der zwischen dem Mittelrohr (16) und dem Behälter (12) gebildet ist, und zwar durch die magnetisierbare Filteranordnung (40) und durch das Mittelrohr (26) zum Auslaß (24).

5. Filter nach Anspruch 4 mit einer abdichtbaren Luke (17), die in den Behälter (12) zur Schaffung eines Zuganges zum Inneren desselben eindringt.

6. Filter nach Anspruch 4 oder 5, wobei des Rückhaltesieb (28) eine poröse Verlängerung des Mittelrohres (26) bildet, ein Deckel (30) angeordnet ist, um die Fließmittelverbindung zwischen dem Behälter (12) und dem Mittelrohr (26) zu unterbinden, mit Ausnahme durch das Rückhaltesieb (28) hindurch, ein Knopf (32) durch den Deckel (30) herausragt und ein Sammelgefäß (34) auf der inneren Oberfläche des Behälters (12) zur Aufnahme des Knopfes (32) angeordnet ist.

7. Filter nach einem der Ansprüche 1 bis 6, wobei es eine einzige elektromagnetische Spule (26) gibt und sowohl der Einlaß (22) als auch der Auslaß (24) an einem Ende (16) des Behälters angeordnet sind.

8. Filter nach einem der Ansprüche 1 bis 6, wobei es mehrere elektromagnetische Spulen (36) gibt und sowohl der Einlaß (22) als auch der Auslaß (24) zwischen den Spulen angeordnet ist.